# EUROPEAN PATENT SPECIFICATION

(11) **EP 0 508 088 B1**
(45) Date of publication and mention of the grant of the patent: **25.09.1996**
(21) Application number: 92103450.0
(22) Date of filing: 28.02.1992
(51) Int. Cl.: G02B 27/00

(54) **Virtual image display device for indicators, such as an automotive instrument panel**
Virtuelles Bilddarstellungsgerät für Anzeiger, wie ein Fahrzeugarmaturenbrett
Système d'affichage de l'image virtuelle d'indicateur, tel qu'un panneau indicateur pour véhicule

(30) Priority: 08.03.1991 IT TO910052
(43) Date of publication of application: 14.10.1992
(73) Proprietor: MAGNETI MARELLI S.p.A., I-20145 Milano (IT)
(72) Inventor: Caruso, Pietro, I-20012 Cuggiono (IT); Poppa, Antonio, I-20100 Milano (IT); Franzosi, Roberto, I-20100 Milano (IT)
(74) Representative: Jorio, Paolo

(56) References cited:
- WO-A-89/02611
- US-A- 3 603 667
- US-A- 3 851 304
- US-A- 4 635 033

## Description

The present invention relates to a virtual image display device, for example in an automotive instrument panel. Due to the limited space available at the front of automotive passenger compartments, the instrument panel is housed inside the dashpanel, within relatively close viewing range of the driver, e.g. at about 60-70 cm.

Direct reading of the instruments requires refocusing of the driver's eye from the road plane, which is practically infinite, to the near plane of the instruments. Continual refocusing in this way inevitably results in eye fatigue, and may even be ineffective in the case of long-sighted drivers, who often eventually stop reading the instruments. It is known from the document US-A-4 635 033, a virtual display device, wherein an indicator located behind a panel is slightly offset downwards with respect to a viewing window. A flat mirror can assume an effective position to reflect the optical signal of an indicator toward the driver's eye, through the window. The mirror can also assume an ineffective position to enable the optical signal to be reflected be the windshield toward the driver.

It is also known from the document WO-A-89/02611, another virtual display device, wherein the indicator is locate behind the dashboard of the vehicle slightly offset upward with respect to a viewing window provided with a transparent shield. The optical signal of the indicator is reflected toward the driver's eye by an aspheric mirror to generate a magnified image.

It is an object of the present invention to provide a straightforward, low-cost display device designed to over come the above drawbacks typically associated with knowr display devices.

According to the present invention, there is provided a display device as defined in the present Claim 1.

Two preferred, non-limiting embodiments of the present invention will be described by way of example with reference to the accompanying drawings, in which:
Fig.1 shows a first embodiment of a virtual image display device in accordance with the present invention;
Fig.2 shows the images produced by two indicators;
Fig.3 shows the virtual image produced on the display device ;
Fig.4 shows a further embodiment of a virtual image display device in accordance with the present invention.

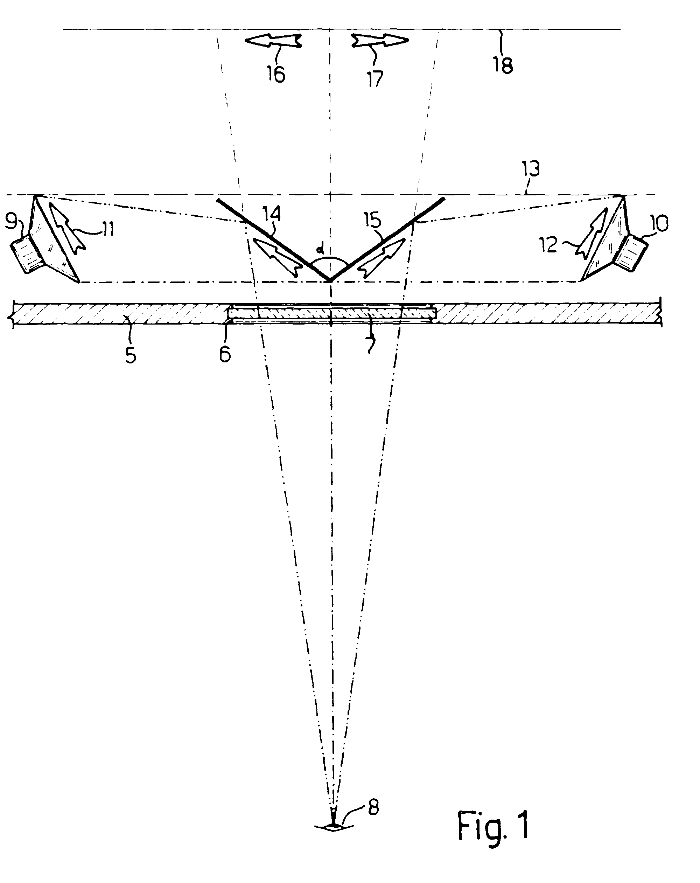

Fig.1 shows a horizontal section of an automotive instrument panel 5 having a transparent window, formed of an opening 6 housin a transparent screen 7, usually located roughly 60-70 cm from the eye 8 of the driver.

Panel 5 is fitted with two indicators, e.g. an analog engine speed indicator 9, and a digital speedometer and mileage counter 10, each producing an optical signal, or image, indicated in Fig.1 by respective arrows 11 and 12. According to the present invention, panel 5 is located closer to the eye 8 of the driver than normal instrument panels, the plane of which is indicated by 13 in Fig.1. Both indicators 9, 10 are located between panel 5 and plane 13, and are provided with respective optical systems comprising respective mirrors 14, 15.

Mirrors 14 and 15 are located behind screen 7, and are flat, ranging in length from say 150 to 170 mm, in height from say 70 to 80 mm, and arranged so as to form an angle a ranging between 90 and 130°.

Indicators 9, 10 are located close behind panel 5, are sideways offset in relation to screen 7, and are secured in any known manner, and oriented so as to project images 11, 12 on to respective mirrors 14, 15.

Indicators 9, 10 are located at such a distance from mirrors 14, 15 as to project images 11, 12 on to mirrors 14, 15, by which they are reflected to produce respective virtual images 16, 17, which, to eye 8, appear as though in plane 18 located the same distance from screen 7 as indicators 9, 10 from respective mirrors 14, 15. As said distance may be far greater than that between indicators 9, 10 and screen 7, a lesser degree of refocusing is required of eye 8.

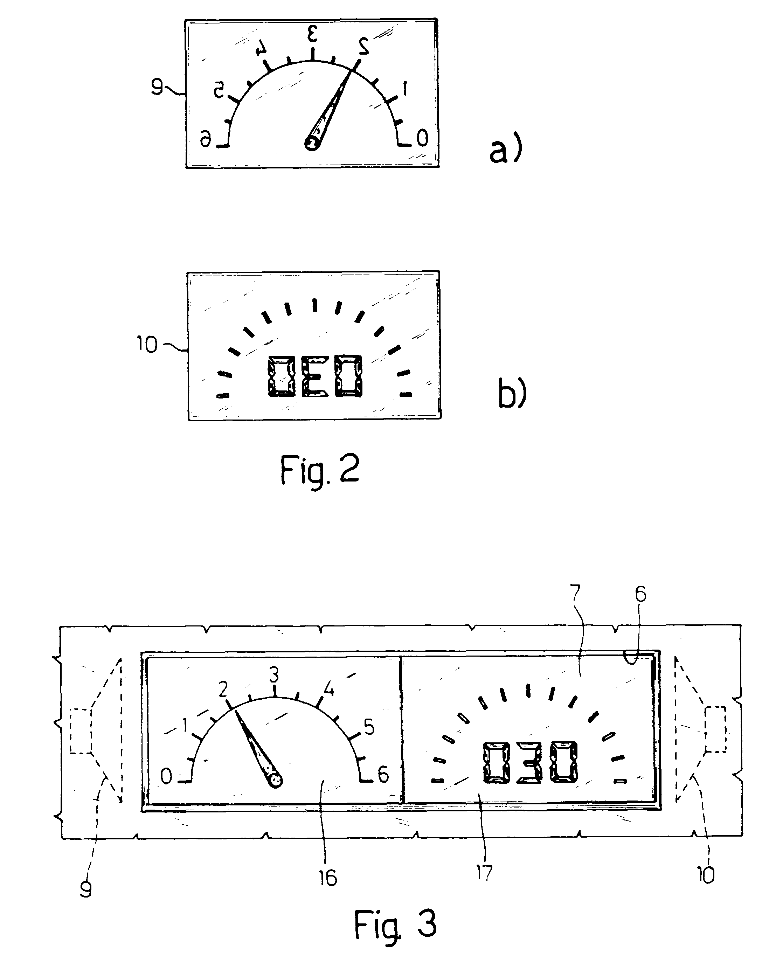

a) and b) in Fig.2 respectively indicate the dials of indicators 9, 10. As images 11, 12 produced by indicators 9, 10 are reproduced specularly by mirrors 14, 15, the alphanumeric information on dials a) and b) of indicators 9, 10 must be inverted, so that the virtual images 16, 17 as seen by eye 8 are as shown in Fig.3.

Indicators 9, 10 may conveniently be located so as to project direct images 11, 12 substantially parallel to panel 5.

In this case, the angle α between mirrors 14 and 15 may be substantially 90°, with a substantially 45° angle between each mirror 14, 15 and panel 5. In actual fact, angle α will be slightly larger, so that the image converges at eye 8. In Fig.1, angle α is exaggerated for the purpose of illustration.

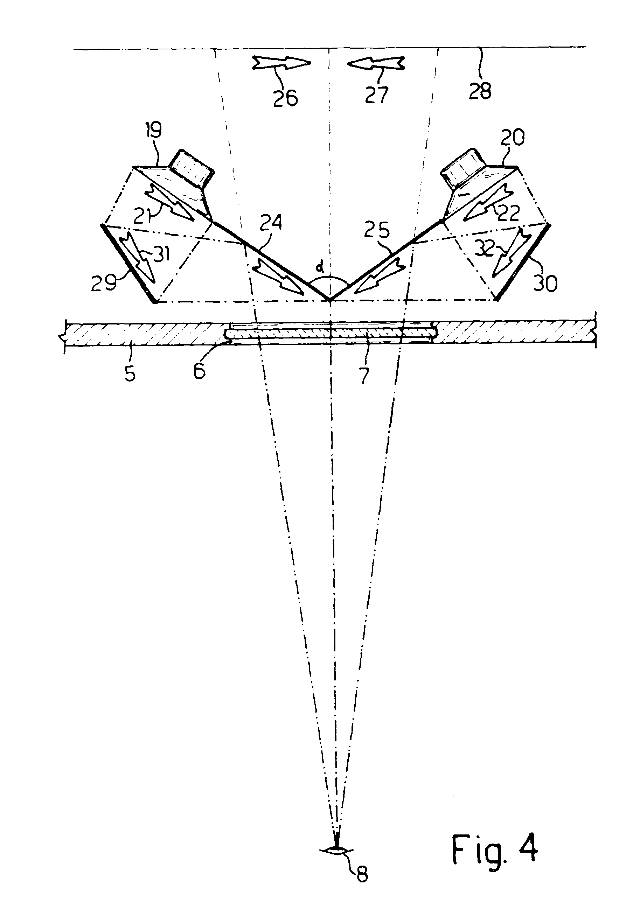

In the Fig.4 embodiment, indicators 19, 20 are located behind panel 5, offset in relation to screen 7, and slightly further back as compared with the previous embodiment. Indicators 19, 20 are provided with respective flat main mirrors 24, 25 located behind screen 7 and substantially coplanar with the dials of indicators 19, 20.

Main mirrors 24, 25 are provided with at least one flat auxiliary mirror 29, 30 sideways offset in relation to screen 7, so as to form a given acute angle in relation to main mirrors 24, 25. Auxiliary mirrors 29, 30 receive respective images 21, 22 produced by indicators 19, 20, which are reflected and projected on to main mirrors 24, 25 to produce intermediate images 31, 32.

In this case, main mirrors 24, 25 reflect intermediate images 31, 32 to produce respective virtual images 26, 27, which, to eye 8, appear as though in plane 28 sufficiently far away from screen 7.

By virtue of the double reflection effected in this embodiment (specular intermediate images 31, 32), images 21, 22 need not be specular, thus requiring no alteration to the dials of indicators 19, 20.

The advantages of the display device according to the present invention will be clear from the foregoing description. Firstly, it provides for an enormous reduction in eye fatigue for refocusing the instrument readings.

Secondly, the display device is compact enough to fit on even the smallest vehicle instrument panels, and can be applied to any type of mass produced indicator with no alterations required.

Finally, the straightforward design of the display device, due mainly to the use of flat mirrors, provides for low-cost mass production.

To those skilled in the art it will be clear that changes may be made to the display device as described and illustrated herein without, however, departing from the scope of the present invention. For example, screen 7 may be provided for one indicator, or for more than two indicators arranged about the screen.

## Claims

1. A virtual image display device in an automotive instrument panel, comprising at least one indicator (9, 10; 19, 20) emitting an optical signal (11, 12; 21-31, 22-32), a transparent window (6, 7) on the panel (5), at least one optical system including a mirror (14, 15; 24, 25) located behind said window (6, 7), said indicator (9, 10; 19, 20) being located behind said panel (5) at a predetermined distance therefrom, said mirror (14, 15; 24, 25) being oriented with respect to said indicator (9, 10; 19, 20) so as to reflect a virtual image (11, 12; 21, 22) of said optical signal (11, 12; 21-31, 22-32) toward the driver's eye (8), characterised in that said indicator (9, 10; 19, 20) projects said optical signal (11, 12; 21-31, 22-32) to run along a direction substantially parallel to said window (6, 7); in that said mirror (14, 15; 24, 25) is flat and positioned at an angle of substantially 45° with respect to said parallel direction; and in that said indicator (9, 10; 19, 20) is located so offset sideways in relation to said window (6, 7) so as to produce said virtual image (16, 17; 26, 27) at a distance from said window (6, 7) substantially greater than said predetermined distance.

2. A device as claimed in Claim 1, characterised in that said indicator (9, 10) directly projects said optical signal (11, 12) toward said mirror (14, 15) along said parallel direction, whereby said virtual image (16, 17 is formed by specular reflection.

3. A device as claimed in Claim 1, characterised in that said indicator (19, 20) projects said optical signal (21, 22) onto an auxiliary mirror (29, 30) for projecting an intermediate image (31, 32) onto said mirror (24, 25) behind said window (6, 7); said mirrors (24, 25; 29, 30) being flat and forming a predetermined acute angle. 4) - A device as claimed in any one of the foregoing Claims, characterised in that at least two of the said indicators (9, 10; 19, 20) are provided, each emitting a respective optical signal (11, 12; 21-31, 22-32) and each provided with a respective mirror (14, 15; 24, 25) behind said window (6, 7); at least one (10, 20) of said indicators (9, 10; 19, 20) emitting said optical signal in form of digital information.

## Patentansprüche

1. Anzeigeeinrichtung für virtuelle Bilder in einer Automobil-Instrumententafel mit wenigstens einem ein optisches Signal (11, 12; 21, 22, 31, 32) aussendenden Anzeigeinstrument (9, 10; 19, 20), einem transparenten Fenster (6, 7) in der Instrumententafel (5), wenigstens einem optischen System mit einem hinter dem Fenster (6, 7) angeordneten Spiegel (14, 15; 24, 25), wobei das Anzeigeinstrument (9, 10; 19, 20) hinter der Instrumententafel (5) in einem vorbestimmten Abstand dazu angeordnet ist und der Spiegel (14, 15; 24, 25) relativ zu dem Anzeigeinstrument (9, 10; 19, 20) zur Reflektion eines virtuellen Bildes (11, 12; 21, 22) des optischen Signales (11, 12; 21, 22, 31, 32) in Richtung auf das Auge (8) eines Fahrers orientiert ist,
**dadurch gekennzeichnet,**
daß das Anzeigeinstrument (9, 10; 19, 20) das optische Signal (11, 12; 21, 22, 31, 32) in einer im wesentlichen parallel zu dem Fenster (6, 7) verlaufenden Richtung projiziert,
daß der Spiegel (14, 15; 24, 25) ebenflächig und in einem Winkel von im wesentlichen 45° relativ zu der parallelen Richtung angeordnet ist und
daß das Anzeigeinstrument (9, 10; 19, 20) relativ zu dem Fenster (6, 7) derart seitlich versetzt angeordnet ist, daß das virtuelle Bild (16, 17; 26, 27) in einer Entfernung von dem Fenster (6, 7) erzeugt wird, die größer ist als der vorbestimmte Abstand.

2. Anzeigeeinrichtung nach Anspruch 1, dadurch gekennzeichnet, daß das Anzeigeinstrument (9, 10) das optische Signal (11, 12) direkt in Richtung auf den Spiegel (14, 15) in der parallelen Richtung projiziert, wobei das virtuelle Bild (16, 17) durch Spiegelreflektion erzeugt wird.

3. Anzeigeeinrichtung nach Anspruch 1, dadurch gekennzeichnet, daß das Anzeigeinstrument (19, 20) das optische Signal (21, 22) auf einen Hilfsspiegel (29, 30) zum Projizieren eines Zwischenbildes (31, 32) auf den Spiegel (24, 25) hinter dem Fenster (6, 7) projiziert und daß die Spiegel (24, 25; 29, 30) ebenflächig sind und einen vorbestimmten spitzen Winkel bilden.

4. Anzeigeeinrichtung nach einem der vorangehenden Ansprüche, dadurch gekennzeichnet, daß wenigstens zwei Anzeigeinstrumente (9, 10; 19, 20) vorgesehen sind, die jeweils ein entsprechendes optisches Signal (11, 12; 21, 22, 31, 32) aussenden und mit jeweils einem entsprechenden Spiegel (14, 15; 24, 25) hinter dem Fenster (6, 7) versehen sind, und daß wenigstens ein Anzeigeinstrument (10, 20) der Anzeigeinstrumente (9, 10; 19, 20) das optische Signal in Form einer digitalen Information aussendet.

## Revendications

1. Dispositif d'affichage d'image virtuelle dans un tableau de bord d'automobile comprenant au moins un indicateur (9,10;19,20) émettant un signal optique (11,12; 21-31, 22-32), une fenêtre transparente (6,7) située sur le tableau de bord (5), au moins un système optique comprenant un miroir (14,15;24,25), situé en arrière de ladite fenêtre (6,7), ledit indicateur (9,10;19,20) étant situé en arrière dudit tableau de bord (5) à une distance prédéterminée de ce dernier, ledit miroir (14,15;24,25) étant orienté par rapport audit indicateur (9,10;19,20) de manière à réfléchir une image virtuelle (11,12;21,22) dudit signal optique (11,12;21-31,22-32) en direction de l'oeil (8) de l'observateur, caractérisé en ce que ledit indicateur (9,10; 19,20) projette ledit signal optique (11,12;21-31;22-32) pour qu'il circule dans une direction essentiellement parallèle à ladite fenêtre (6,7); en ce que ledit miroir (14,15;24,25) est plat et est positionné en faisant un angle égal sensiblement à 45° par rapport à ladite direction parallèle; et en ce que ledit indicateur (9,10;19,20) est décalé latéralement par rapport à ladite fenêtre (6,7) de manière à produire ladite image virtuelle (16,17;26,27) à une distance de ladite fenêtre (6,7), qui est nettement supérieure à ladite distance prédéterminée.

2. Dispositif suivant la revendication 1, caractérisé en ce que ledit indicateur (9,10) projette directement ledit signal optique (11,12) en direction dudit miroir (14,15) dans ladite direction parallèle, ce qui a pour effet que ladite image virtuelle (16,17) est formée par réflexion spéculaire.

3. Dispositif selon la revendication 1, caractérisé en ce que ledit indicateur (19,20) projette ledit signal optique (21,22) sur un miroir auxilaire (29,30) de manière à projeter une image intermédiaire (31,32) sur ledit miroir (24,25) en arrière de ladite fenêtre (6,7); lesdits miroirs (24,25;29,30) étant plats et faisant un angle aigu prédéterminé.

4. Dispositif selon l'une quelconque des revendications précédentes, caractérisé en ce qu'au moins deux desdits indicateurs (9,10;19,20) sont prévus, chacun émettant un signal optique respectif (11,12;21-31,22-32) et chacun étant pourvu d'un miroir respectif (14,15;24,25) en arrière de ladite fenêtre (6,7); au moins l'un (10,20) desdits indicateurs (9,10;19,20) émettant ledit signal optique sous la forme d'une information numérique.
